**Europäisches Patentamt**

**European Patent Office**

**Office européen des brevets**

(11) Veröffentlichungsnummer: **0 456 854 B1**

## (12) EUROPÄISCHE PATENTSCHRIFT

(45) Veröffentlichungstag der Patentschrift: **27.07.94**

(51) Int. Cl.5: **H02M 7/5387**

(21) Anmeldenummer: **90109145.4**

(22) Anmeldetag: **15.05.90**

(54) **Verfahren und Vorrichtung zur Steuerung eines dreiphasigen Pulswechselrichters.**

(43) Veröffentlichungstag der Anmeldung:
**21.11.91 Patentblatt 91/47**

(45) Bekanntmachung des Hinweises auf die
Patenterteilung:
**27.07.94 Patentblatt 94/30**

(84) Benannte Vertragsstaaten:
**AT CH DE FR GB IT LI SE**

(56) Entgegenhaltungen:
**DE-A- 3 131 361**
**GB-A- 2 059 651**

(73) Patentinhaber: **SIEMENS AKTIENGESELL-
SCHAFT**
**Wittelsbacherplatz 2**
**D-80333 München(DE)**

(72) Erfinder: **Fries, Friedemann, Dipl.-Ing.**
**Luitpoldstrasse 76**
**D-8520 Erlangen(DE)**
Erfinder: **Link, Ulrich, Dr.-Ing.**
**Tulpenweg 8**
**D-8523 Baiersdorf(DE)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Rank Xerox (UK) Business Services
(3. 10/3.0 9/3.3.3)

**Beschreibung**

Die Erfindung betrifft ein Verfahren und eine Vorrichtung zur Steuerung eines dreiphasigen Pulswechselrichters, bei dem ein dreiphasiges, sinusförmiges Strom-Führungsgrößensystem vorgegeben wird, die Strangströme einer der Pulswechselrichter nachgeschalteten Drehfeldmaschine gemessen, mit den Führungsgrößen verglichen und in Abhängigkeit der Regelabweichung die Phasen des Pulswechselrichters derart geschaltet werden, daß bei Überschreiten einer oberen Toleranzgrenze die entsprechende Phase mit einem negativen Potential einer Zwischenkreisspannung und bei Unterschreiten einer unteren Toleranzgrenze die entsprechende Phase mit einem positiven Potential einer Zwischenkreisspannung verbunden werden, und wenn keine Regelabweichung eine vorgegebene Toleranzgrenze überschreitet, werden alle Phasen mittels eines Freilaufsignals mit dem positiven oder negativen Potential der Zwischenkreisspannung verbunden.

Ein derartiges Steuerverfahren ist aus DE-A-3 131 361 bekannt.

Ein derartiges Steuerverfahren ist als Toleranzbandregelung bekannt. Eine derartige Toleranzbandregelung ist unter anderem im Vortragsmanuskript von Prof. Dr.-Ing. J. Holz mit dem Titel "Moderne Antriebstechnik - Möglichkeiten und Vorteile neuartiger Drehstrom-Antriebstechnologie im Dialog zwischen Forschung, Herstellern und Anwendern", Fachveranstaltung Nr. F-10-520-073-8, Haus der Technik E.V. Außeninstitut der RWTH-Aachen, Essen, insbesondere im Kapitel 6, Seiten 6 bis 8, näher dargestellt. Bei der Toleranzbandregelung bestimmt immer die an der Streuinduktivität abfallende Spannung die Richtung und die Geschwindigkeit der Statorstromänderung. Durch die richtige Wahl der Wechselrichterausgangsspannungsraumzeiger kann der Raumzeiger des Statorstromes immer in der Nähe seines Sollwertes gehalten werden. Bei kleinen Drehzahlen ist die induzierte Spannung sehr klein, wodurch sich der Stromraumzeiger mit großer Geschwindigkeit immer in Richtung des angelegten Spannungsraumzeigers bewegt. Dabei werden nur aktive Zeiger ausgewählt. Da die Differenz zwischen der induzierten Spannung und der Statorspannung bei kleinen Drehzahlen groß ist, erreicht der Statorstrom schnell die nächste Toleranzgrenze. Dadurch wird die Schaltfrequenz unnötig hoch.

Die Differenz zwischen einem Nullspannungszeiger und der induzierten Spannung ist wesentlich geringer, wodurch der Statorstrom das Toleranzband langsamer durchlaufen würde. Wenn der Nullspannungszeiger angelegt wird, kann die Schaltfrequenz verringert werden. Wenn der Nullspannungszeiger im falschen Augenblick angewählt wird, kann der Stromfehler den doppelten Wert annehmen, da, wenn der Nullspannungszeiger den Strom antreibt, erst ein aktiver Zeiger den Strom wieder in das Innere eines von den aktiven Zeigern aufgespannten Sechseck zurückführen kann, d.h. der Strom muß wenigstens in einem anderen Strang oder im Extremfall in den beiden anderen Strängen gleichzeitig eine Toleranzgrenze überschreiten, damit ein aktiver Zeiger angelegt wird.

Aus der DE 31 31 361 C2 ist eine Laststromregelung eines Pulswechselrichters bekannt, bei der gezielt abwechselnd einer der beiden Nullspannungszeiger angesteuert wird. Diese Vorrichtung besteht aus einer ersten, zweiten und dritten Vergleichsstufe, einer Auswahlstufe, einem Winkelgeber und eine Umschaltstufe. Die erste Vergleichsstufe weist pro Phase einen Vergleicher und einen Komparator mit einer Ansprechgrenze praktisch Null und bildet durch Vergleich der momentanen Istwerte der Phasenströme mit dem momentan vorgegebenen Sollwerten momentane Regeldifferenzen. Dieses Regeldifferenzen werden der nachgeschalteten Auswahlstufe zugeführt, die von der zweiten Vergleichsstufe getaktet wird. An den Ausgängen dieser Auswahlstufe stehen Signale in derjenigen Kombination an, die als Ansteuersignal für die Ansteuerung eines bestimmten Spannungszeigers erforderlich ist. Bei jedem Triggerimpuls wird der jeweils bis zum Auftreten des nächsten Triggerimpulses anzusteuernde Spannungsraumzeiger in der Auswahlstufe bestimmt. Die zweite Vergleichsstufe ist als Triggerimpulsgenerator verwendet und enthält pro Phase einen mit einer Toleranzgrenze behafteten Komparator mit nachgeschalteter Impulsstufe, wobei die Ausgänge dieser Impulsstufen mittels eines ODER-Gatters miteinander verknüpft sind. Der Winkelgeber bestimmt in Abhängigkeit eingegebener Betriebsgrößen der Last (Polradlagewinkel $\alpha$ und Vorzeichen der Drehzahl und des Ständerstromes) einen Winkelbereich, der die räumliche Lage der inneren Spannung umschließt. Eine dritte Vergleicherstufe mit Komparatoren überprüft, ob das einer diskreten Winkellage des Sollspannungszeigers entsprechende Ausgangssignal der ersten Vergleichsstufe mit einem der Ausgangssignale des Winkelgebers übereinstimmt. Beim Ansprechen einer der Komparatoren entsteht am Ausgang der nachgeschalteten logischen Stufe ein Signal, mit dem in der Umschaltstufe von den in der ersten Vergleichsstufe gebildeten Ansteuersignale auf eine Ansteuerung des Klemmenkurzschlusses (oberer bzw. unterer Freilauf) umgeschaltet wird. Der Klemmenkurzschluß (abwechselnd der obere und der untere Freilauf) wird nur angesteuert, wenn der Laststrom aufgrund der inneren Spannung der Last innerhalb der Toleranzgrenzen bleibt, ohne daß über den Umrichter eine Spannung eingeprägt werden muß. Deshalb ist der dritten Vergleichsstufe eine vom Ausgang der zweiten Vergleichsstufe beaufschlagtes Gatter nachgeschaltet, das das Umschalten der Ansteuersignale auf Klemmenkurzschluß unterdrückt, wenn die Sollwert/Istwert-Differenz eines Phasenstromes die vorgegebene Toleranzgrenze überschreitet. Durch Aufschalten von Nullspannungszeigern läßt sich die Pulsfrequenz reduzieren, stellt sich jedoch noch in Abhängigkeit von nicht beeinflußbaren Parametern wie die Induktivität der Last und ihrer Gegenspannung ein. Es kann damit nicht sichergestellt werden, daß der zulässtge bzw. gewünschte Wertebereich der Pulsfrequenz stets eingehalten wird.

Der Erfindung, die dem Anspruch 1 zu entnehmen ist, liegt nun die Aufgabe zugrunde, ein Verfahren zur Steuerung eines dreiphasigen Pulswechselrichters anzugeben, mit dem einerseits mit möglichst geringer Pulsfrequenz einen möglichst oberschwingungsarmen Stromverlauf zu erreichen und andererseits die zulässige Pulsfrequenz in allen Betriebszuständen auszunutzen.

Dazu wird bei einem Verfahren der gemeinsame Schaltzustand der drei Wechselrichterausgänge so ermittelt, daß zum Erreichen des Schaltzustandes "Freilauf" lediglich ein Schaltvorgang erforderlich ist. D.h., daß derjenige Schaltzustand einer Stellgröße, dessen Pegel von dem der beiden anderen Schaltzustände abweicht, zu diesem Pegel der beiden anderen Schaltzustände geschaltet wird. Damit wird gleichzeitig sichergestellt, daß im Mittel alle Stromrichterventile des Pulswechselrichters gleich oft schalten.

Weitere vorteilhafte Verfahren sind den Ansprüchen 2 bis 8 zu entnehmen.

Bei einem weiteren Verfahren wird durch Variation der Breite des Toleranzbandes die Pulsfrequenz geregelt. Dazu wird der Pulsfrequenz-Istwert der Stromrichterventile des Pulswechselrichters gemessen. Der ermittelte Pulsfrequenz-Istwert wird mit einem Pulsfrequenz-Sollwert verglichen und die Pulsfrequenz-Regelabweichung mittels eines Pulsfrequenzreglers in eine Toleranzstellspannung gewandelt. Diese Toleranzstellspannung variiert die Breite der Hysterese der Zweipunkt-Stromregler und der Bereichsbandüberwachungsschaltungen zur Ermittlung der Zulässigkeit des Schaltzustandes "Freilauf". Bei zu hoher Pulsfrequenz wird die Hysterese vergrößert und bei zu niedriger Pulsfrequenz wird die Hysterese verringert. Die Nachstellzeit des Pulsfrequenzreglers ist deutlich höher zu wählen als der Kennwert des Pulsfrequenz-Sollwertes.

Bei einem vorteilhaften Verfahren wird die Toleranzstellspannung invertiert und diese invertierte Toleranzstellspannung in eine Toleranzstellfrequenz gewandelt, die die Weiterleitung eines erzeugten Freilaufsignals taktet. D.h., ein Umschalten auf Freilauf bzw. ein Zurückschalten auf die Ausgangssignale auf die Zweipunktregler mit Hysterese durch Ändern des erzeugten Freilaufsignals wird nicht zu jedem Zeitpunkt mehr zugelassen. Hierdurch wird bei einem zu hohen Pulsfrequenz-Istwert durch die Reduzierung der der invertierten Toleranzstellspannung äquivalenten Frequenz die Pulsfrequenz verringert und entsprechend bei einem zu niedrigen Pulsfrequenz-Istwert durch Erhöhung der Toleranzstellfrequenz die Pulsfrequenz erhöht.

Bei einem weiteren vorteilhaften Verfahren wird der Pulsfrequenz-Sollwert mittels einer nichtlinearen Kennlinie in Abhängigkeit der Amplitude des Strangstromes verändert, wobei bei kleinen Stromamplituden ein höherer Pulsfrequenz-Sollwert erzeugt wird als bei großen Stromamplituden. Dies beruht auf der Erkenntnis, daß die Schaltverluste von Stromrichterventilen mit zunehmendem Ventilstrom überproportional zunehmen. Durch die Veränderung des Pulsfrequenz-Sollwertes in Abhängigkeit der Amplitude des aktuellen Ausgangsstromes werden die Schaltverluste der Stromrichterventile des Pulswechselrichters mit dem gesamten Betriebsbereich konstant gehalten.

Damit schnelle Änderungen der Amplitude des Ausgangsstromes des Pulswechselrichters berücksichtigt werden können, wird die Amplitude des Ausgangsstromes differenziert und direkt der erzeugten Toleranzstellspannung aufgeschaltet. Dadurch wird, wenn bei niedrigem Ausgangsstrom die Stromamplitude sich schnell vergrößert, die hohe Pulsfrequenz unverzüglich verringert, damit die Stromrichterventile nicht durch zu hohe Schaltverluste gestört werden.

Eine Vorrichtung zur Durchführung des Verfahrens und die vorteilhaften Ausgestaltungen dieser Vorrichtung sind den Ansprüchen 9 bis 21 zu entnehmen.

Zur weiteren Erläuterung der Erfindung wird auf die Zeichnung Bezug genommen, in der ein Ausführungsbeispiel der Vorrichtung zur Durchführung des Verfahrens zur Steuerung eines dreiphasigen Pulswechselrichters schematisch veranschaulicht ist.

Figur 1    zeigt einen prinzipiellen Aufbau einer Toleranzbandregelung eines Pulswechselrichters,

Figur 2    zeigt den Aufbau einer Stromregleranordnung mit Freilauflogik und eines Toleranzbandstellers, in

Figur 3    ist der Aufbau des Toleranzbandstellers und eine Phase der Stromregleranordnung veranschaulicht, in

Figur 4    ist eine weitere Ausführungsform des Toleranzbandstellers zusammen mit einer Phase der Stromregleranordnung und einem Teil der Freilauflogik dargestellt,

Figur 5     zeigt ein Blockschaltbild einer vorteilhaften Ausführungsform des Toleranzbandstellers und die

Figur 6     zeigt Verläufe von Stromführungsgröße, Strangstrom und Stellgröße bei ausreichender Stellreserve und bei nichtausreichender Stellreserve.

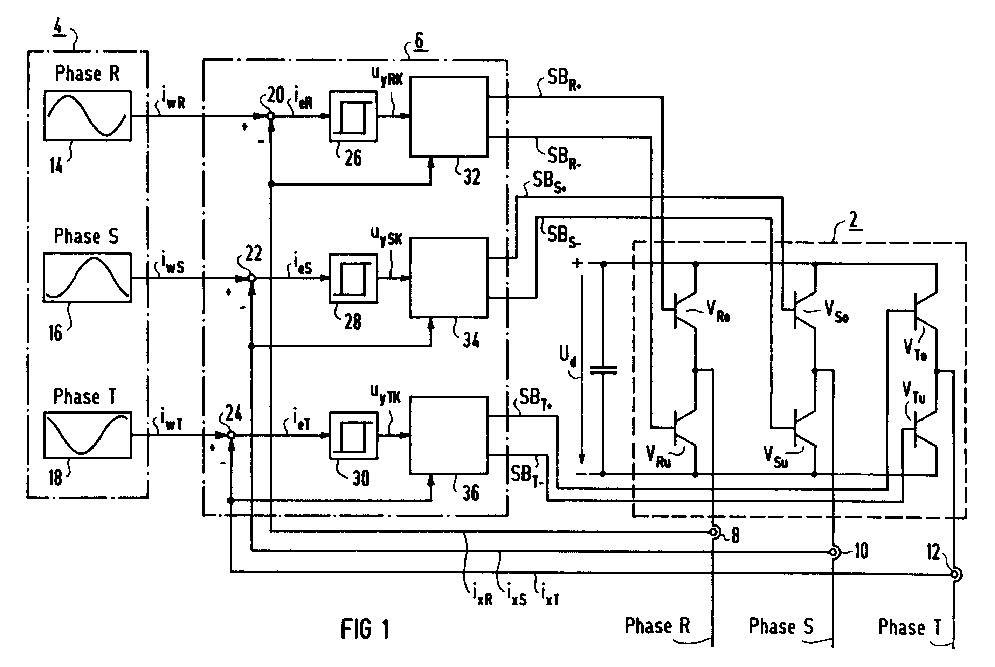

In den Figuren 1 bis 6 werden gleiche Signale bzw. gleiche Bauelemente mit gleichen Bezugszeichen versehen.

In Figur 1 ist eine bekannte Toleranzbandregelung eines Pulswechselrichters 2 dargestellt. Diese Toleranzbandregelung besteht aus einem dreiphasigen, sinusförmigen Strom-Führungsgrößengeber 4 und einer Stromregleranordnung 6. Der Strom-Führungsgrößengeber 4 besteht aus drei Sinusgeneratoren 14, 16 und 18, die jeweils eine Strom-Führungsgröße $i_{wR}$, $i_{wS}$ und $i_{wT}$ erzeugen. Alternativ können auch nur zwei Sinusgeneratoren 14 und 16 verwendet werden, deren Strom-Führungsgrößen $i_{wR}$ und $i_a$ oder $i_{wR}$ und $i_{wS}$ um 90° oder 120° phasenverschoben sind. Die beiden fehlenden Strom-Führungsgrößen $i_{wS}$ und $i_{wT}$ können mittels folgender Gleichung:

$$i_{wS} = -0,5\, i_{wR} + 0,5\, \sqrt{3}\, i_a \text{ und}$$
$$i_{wT} = -0,5\, i_{wR} - 0,5\, \sqrt{3}\, i_a$$

bzw. die dritte Strom-Führungsgröße $i_{wT}$ kann mittels folgender Gleichung

$$i_{wT} = -i_{wR} - i_{wS}$$

berechnet werden.

Die Stromregleranordnung 6 erhält drei um jeweils 120° phasenverschobene Stromsollwerte $i_{wR}$, $i_{wS}$, $i_{wT}$, auch Strom-Führungsgrößen genannt, und drei Stromistwertes $i_{xR}$, $i_{xS}$ und $i_{xT}$ der Pulswechselrichter-Ausgangsströme (strangströme), die mittels Meßeinrichtungen 8, 10 und 12 gemessen sind. Außerdem weist diese Stromregleranordnung 6 eingangsseitig pro Phase einen Vergleicher 20, 22 und 24 auf. Mittels dieser Vergleicher 20, 22 und 24 werden jweils der Phasenstrom-Istwert $i_{xR}$ bzw. $i_{xS}$ bzw. $i_{xT}$ mit dem Phasenstrom-Sollwert $i_{wR}$ bzw. $i_{wS}$ bzw. $i_{wT}$ verglichen. Die Regelabweichung $i_{eR}$ bzw. $i_{eS}$ bzw. $i_{eT}$ wird einem hysteresebehafteten Zweipunktregler 26 bzw. 28 bzw. 30 zugeführt. Dem hysteresebehafteten Zweipunktregler 26 bzw. 28 bzw. 30 ist eine Ansteuereinrichtung 32 bzw. 34 zw. 36 nachgeschaltet. Dieser Ansteuereinrichtung 32 bzw. 34 bzw. 36 ist ein Strom-Istwert $i_{xR}$ bzw. $i_{xS}$ bzw. $i_{xT}$ zugeführt. Die Ansteuereinrichtung 32 bzw. 34 bzw. 36 erzeugt aus der vom Zweipunktstromregler 26 bzw. 28 bzw. 30 erstellten Stellgröße $u_{yRK}$ bzw. $u_{ySK}$ bzw. $u_{yTK}$ unter Berücksichtigung von vorgegebenen Mindest-Ein-und-Auszeiten sowie unter Beachtung der erforderlichen Verriegelung für die Einschaltbefehle der beiden Ventile $V_{Ro}$ und $V_{Ru}$ bzw. $V_{So}$ und $V_{Su}$ bzw. $V_{To}$ und $V_{Tu}$ je ein Ansteuerbefehl $SB_{R+}$ bzw. $SB_{S+}$ bzw. $SB_{T+}$ für das obere Ventil $V_{Ro}$ bzw. $V_{So}$ bzw. $V_{To}$ und ein Ansteuerbefehl $SB_{R-}$ bzw. $SB_{S-}$ bzw. $SB_{T-}$ für das untere Ventil $V_{Ru}$ bzw. $V_{Su}$ bzw. $V_{Tu}$ des Pulswechselrichters 2. Unabhängig von der Stellgröße $u_{yRK}$ bzw. $u_{ySK}$ bzw. $u_{yTK}$ wird in der Ansteuereinrichtung 32 bzw. 34 bzw. 36 beim Auftreten eines höheren als dem zugelassenen Strom eine Impulssperre erzeugt.

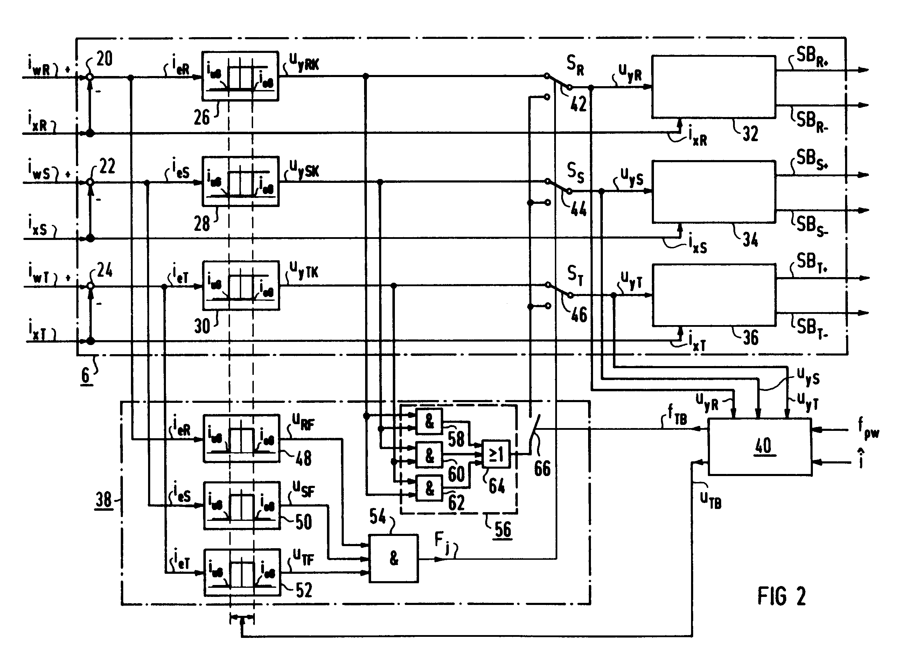

In Figur 2 ist eine weitere Ausführungsform der Stromregleranordnung 6 mit einer Freilauflogik 38 und eines Toleranzbandstellers 40 dargestellt. Diese Stromregleranordnung 6 weist jeweils zwischen dem hysteresebehafteten Zweipunktregler 26 bzw. 28 bzw. 30 und der Ansteuereinrichtung 32 bzw. 34 bzw. 36 einen Umschalter 42 bzw. 44 bzw. 46 auf. Der Ausgang des Zweipunktreglers 26 bzw. 28 bzw. 30 ist mit dem ersten Eingang des Umschalters 42 bzw. 44 bzw. 46 verbunden, an dessen Ausgang die Ansteuereinrichtung 32 bzw. 34 bzw. 36 angeschlossen ist.

Die Freilauflogik 38 enthält pro Phase eine Bereichsbandüberwachungsschaltung 48, 50 und 52, deren Ausgänge mittels eines UND-Gatters 54 miteinander verknüpft sind. Außerdem weist die Freilauflogik 38 eine Auswertelogik 56 auf. Eingangsseitig ist die Bereichsbandüberwachungsschaltung 48 bzw. 50 bzw. 52 mit dem Eingang des hysteresebehafteten Zweipunktregler 26 bzw. 28 bzw. 30 verknüpft. Als Bereichsbandüberwachungsschaltung 48 bzw. 50 bzw. 52 kann beispielsweise ein Fensterkomparator verwendet werden, dessen Aufbau aus dem Buch "Halbleiter-Schaltungstechnik", U. Tietze und Ch. Schenk, 6. Auflage, 1983, Seite 180, bekannt ist. Der Ausgang des UND-Gatters 54 ist jeweils mit dem Betätigungseingang des Umschalters 42 bzw. 44 bzw. 46 verbunden.

Die Auswertelogik 56 besteht aus drei UND-Gatter 58, 60 und 62 und einem ODER-Gatter 64. Der Ausgang des Zweipunktreglers 26 der Phase R ist mit dem ersten Eingang des UND-Gatters 58 und mit dem zweiten Eingang des UND-Gatters 62, der Ausgang des Zweipunktreglers 28 der Phase S ist mit dem zweiten Eingang des UND-Gatters 58 und dem ersten Eingang des UND-Gatters 60 und der Ausgang des Zweipunktreglers 30 der Phase T ist mit dem zweiten Eingang des UND-Gatters 60 und dem ersten Eingang des UND-Gatters 62 verknüpft. Die Ausgänge dieser UND-Gatter 58, 60 und 62 sind jeweils mit einem Eingang des nachgeschalteten ODER-Gatters 64 verbunden. Der Ausgang des ODER-Gatters 64 ist über einen Unterbrecher 66 jeweils mit einem zweiten Eingang der Umschalter 42, 44 und 46 verknüpft. Der Unterbrecher 66 wird vom Toleranzbandsteller 40 gesteuert.

Die Bereichsbandüberwachungsschaltungen 48, 50 und 52 stellen jweils fest, ob die drei Strom-Istwerte $i_{xR}$, $i_{xS}$ und $i_{xT}$ innerhalb des Toleranzbandes $i_{oG}$-$i_{uG}$ um ihren Strom-Sollwert $i_{wR}$, $i_{wS}$ und $i_{wT}$ befinden, d.h., es wird überprüft, ob die Regelabweichung $i_{eR}$, $i_{eS}$ und $i_{eT}$ jeder Phase jeweils innerhalb des Toleranzbandes $i_{oG}$-$i_{uG}$ sich befinden. Trifft dies zu, so wechselt das Freilaufsignal $F_j$ seinen Pegel von "low" auf "high", wodurch die Schalter der Umschalter 42, 44 und 46 auf den zweiten Eingang geschaltet werden. Die Auswertelogik 56 bestimmt in Abhängigkeit der Schaltzustände der Stellgrößen $u_{yRK}$, $u_{ySK}$ und $u_{yTK}$ welcher der beiden Freiläufe angesteuert werden soll. Wenn z.B. die Ausgänge der Zweipunktregler 26 und 28 eine Stellgröße $u_{yRK}$ und $u_{ySK}$ mit einem logischen Pegel "1" aufweisen, so entsteht am Ausgang des ODER-Gatters 64 ein Signal mit dem logischen Pegel "1". Weisen die Ausgänge der Zweipunktregler 26 und 28 dagegen jeweils eine Stellgröße $u_{yRK}$ und $u_{ySK}$ mit einem logischen Pegel "0" auf, so steht am Ausgang des ODER-Gatters 64 ein Signal mit dem logischen Pegel "0" an. D.h., der Freilauf bzw. der Klemmenkurzschluß wird durch einen einzigen Schaltzustand erzeugt, wobei immer gleiche Schaltzustände zweier Stellgrößen bestimmen, welcher Freilauf (oberer bzw. unterer) angesteuert wird. Dadurch wird nicht nur die Pulsfrequenz des Pulswechselrichters 2 reduziert, sondern auch gleichzeitig sichergestellt, daß im Mittel alle Stromrichterventile $V_{Ro}$, $V_{Ru}$, $V_{So}$, $V_{Su}$, $V_{To}$ und $V_{Tu}$ gleich oft schalten.

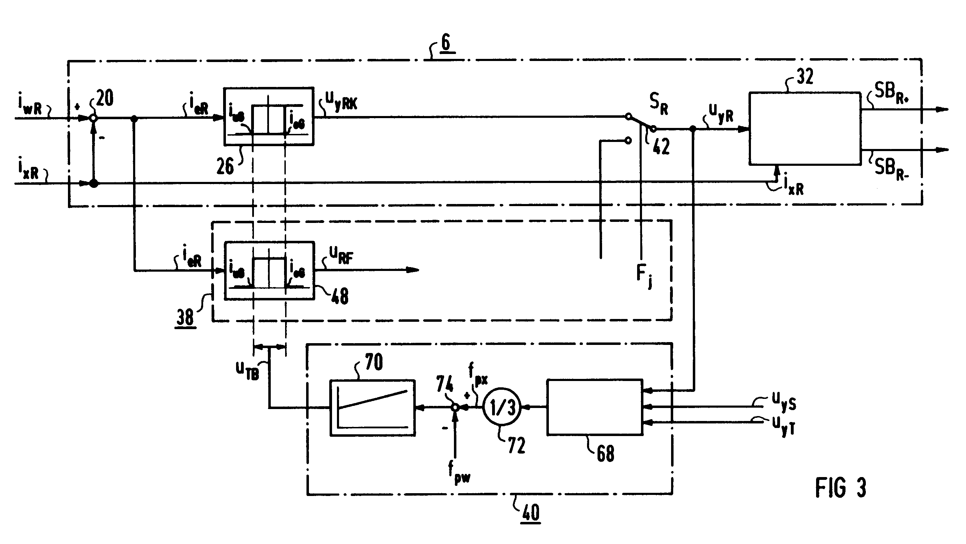

Der Toleranzbandsteller 40, deren Ausführungsformen in den Figuren 3 bis 5 näher dargestellt sind, steuert einerseits die Breite des Toleranzbandes $i_{oG}$-$i_{uG}$ der Zweipunktregler 26, 28 und 30 und der Bereichsbandüberwachungsschaltungen 48, 50 und 52 und/oder den Schalter des Unterbrechers 66. Dem Toleranzbandsteller 40 werden einerseits die Stellgrößen $u_{yR}$, $u_{yS}$ und $u_{yT}$, die an den Eingängen der Ansteuereinrichtungen 32, 34 und 36 anstehen, und andererseits einen Pulsfrequenz-Sollwert $f_{pw}$ zugeführt. Für eine vorteilhafte Ausführungsform des Toleranzbandstellers 40 wird außerdem noch die Amplitude $\hat{i}$ des Strangstromes $i_{xR}$ bzw. $i_{xS}$ bzw. $i_{xT}$ zugeführt.

In Figur 3 ist eine erste Ausführungsform des Toleranzbandstellers 40 näher dargestellt. Aus Übersichtlichkeitsgründen ist von der Stromregleranordnung 6 nur die Phase R und von der Freilauflogik 38 nur die erste Breitbandüberwachungsschaltung 48 dargestellt. Der Toleranzbandsteller 40 besteht eingangsseitig aus einem Frequenzzähler 68 und ausgangsseitig aus einem Pulsfrequenzregler 70. Dem Frequenzzähler 68 ist eine Konstante 72 mit dem Wert 1/3 nachgeschaltet, deren Ausgang mit einem positiven Eingang eines Vergleichers 74 verknüpft ist. Am negativen Eingang des Vergleichers 74 steht ein Pulsfrequenz-Sollwert $f_{pw}$ an. Ausgangsseitig ist der Vergleicher 74 mit dem Eingang des Pulsfrequenzreglers 70 verbunden. Als Pulsfrequenzregler 70 ist ein PI-Regler vorgesehen.

Entsprechend dieser Figur 3 wir die Pulsfrequenz der Stromrichterventile $V_{Ro}$, $V_{Ru}$, $V_{So}$, $V_{Su}$, $V_{To}$ und $V_{Tu}$ des Pulswechselrichters 2 gemessen, indem beispielsweise die Stellgrößen $u_{yR}$, $u_{yS}$ und $u_{yT}$ auf die Eingänge des Frequenzzählers 68 gegeben werden. Alternativ können auch die tatsächlichen Schaltbefehle oder die binären Potentiale der Pulswechselrichter-Ausgänge zur Ermittlung der Pulsfrequenz herangezogen werden. Eine mögliche getreue Messung und Verarbeitung der Pulsfrequenzen der einzelnen Phasen R, S und T ist nicht erforderlich, da die Schaltvorgänge ohne besondere Maßnahmen ohnehin annähernd gleichmäßig auf die drei Phasen R, S und T verteilt sind. Die Summe am Ausgang des Frequenzzählers 68 wird mittels der Konstanten 72 gewichtet, so daß am Ausgang der Konstanten 72 bzw. am positiven Eingang des Vergleichers 74 der ermittelte Pulsfrequenz-Istwert $f_{px}$ ansteht. Dieser Pulsfrequenz-Istwert $f_{px}$ wird mit dem Pulsfrequenz-Sollwert $f_{pw}$ verglichen und die Differenz dem Pulsfrequenzregler 70 zugeführt. Der Pulsfrequenzregler 70 regelt die Breite des Toleranzbandes $i_{oG}$-$i_{uG}$ der Zweipunktregler 26, 28 und 30 und der Bereichsbandüberwachungsschaltungen 48, 50 und 52 so, daß bei einem zu hohen Pulsfrequenz-Istwert $f_{px}$ die Breite des Toleranzbandes $i_{oG}$-$i_{uG}$ vergrößert wird und daß bei einem zu niedrigen Pulsfrequenz-Istwert $f_{px}$ die Breite der Hysterese $i_{oG}$-$i_{UG}$ verringert wird. Dabei ist die Nachstellzeit des Pulsfrequenzreglers 70 deutlich größer zu wählen, als der Kehrwert des Pulsfrequenz-Sollwertes $f_{pw}$.

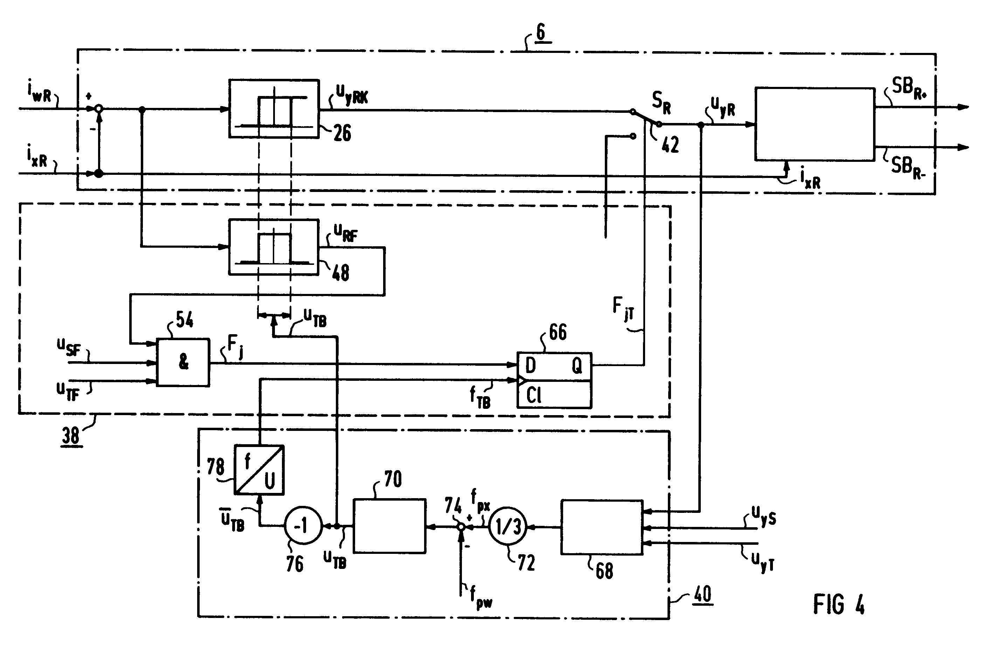

In Figur 4 ist eine weitere Ausführungsform des Toleranzbandstellers 40 näher dargestellt. Aus Übersichtlichkeitsgründen ist von der Stromregleranordnung 6 nur die Phase R und von der Freilauflogik 38 nur die Bereichsbandüberwachungsschaltung 48, das UND-Gatter 54 und der Unterbrecher 66 dargestellt. Diese Ausführungsform des Toleranzbandstellers 40 unterscheidet sich von der Ausführungsform des Toleranzbandstellers 40 gemäß Figur 3 dadurch, daß dem Pulsfrequenzregler 70 noch ein Invertierer 76 nachgeschaltet ist, dessen Ausgang mit einem Eingang eines Spannungs-Frequenz-Wandlers 78 verbunden ist. Dadurch wird die Toleranzstellspannung $u_{TB}$ in eine invertierte Toleranzstellspannung $\overline{u}_{TB}$ gewandelt. Die Toleranzstellspannung $u_{TB}$ verändert die Hysterese und die invertierte Toleranzstellspannung $\overline{u}_{TB}$ wird in eine Toleranzstellfrequenz $f_{TB}$ gewandelt. Da der Ausgang des Spannungs-Frequenz-Wandlers 78 mit dem Schalter des Unterbrechers 66 verknüpft ist, wird der Unterbrecher 66 von der Toleranzstellfrequenz $f_{TB}$ gesteuert. Als Unterbrecher 66 ist in der Figur 4 eine taktzustandsgesteuerte Speicherzelle vorgesehen, dessen Dateneingang D mit dem Ausgang des UND-Gatters 54 der Freilauflogik 38, dessen Takteingang Cl mit dem Ausgang des Spannungs-Frequenz-Wandlers 78 des Toleranzbandstellers 40 und dessen Ausgang Q jeweils mit einem Betätigungseingang der Umschalter 42, 44 und 46 verknüpft sind. Mittels der Toleranzstellfrequenz $f_{TB}$ wird der Freilauf getaktet angesteuert. D.h., das Freilaufsignal $F_j$, das ein Umschalten auf Freilauf bzw. ein Zurückschalten auf die Ausgangssignale der Zweipunktregler 26, 28 und 30 veranlaßt, wird nicht zu jedem Zeitpunkt zugelassen, wodurch die Dauer des Schaltzustandes "Freilauf" in Abhängigkeit der Toleranzstellfrequenz $f_{TB}$ variiert wird. Bei einem zu hohen Pulsfrequenz-Istwert wird durch die Reduzierung der Toleranzstellfrequenz $f_{TB}$ die Pulsfrequenz verringert und entsprechend bei einem zu niedrigen Pulsfrequenz-Istwert wird durch eine Erhöhung der Toleranzstellfrequenz $f_{TB}$ die Pulsfrequenz angehoben.

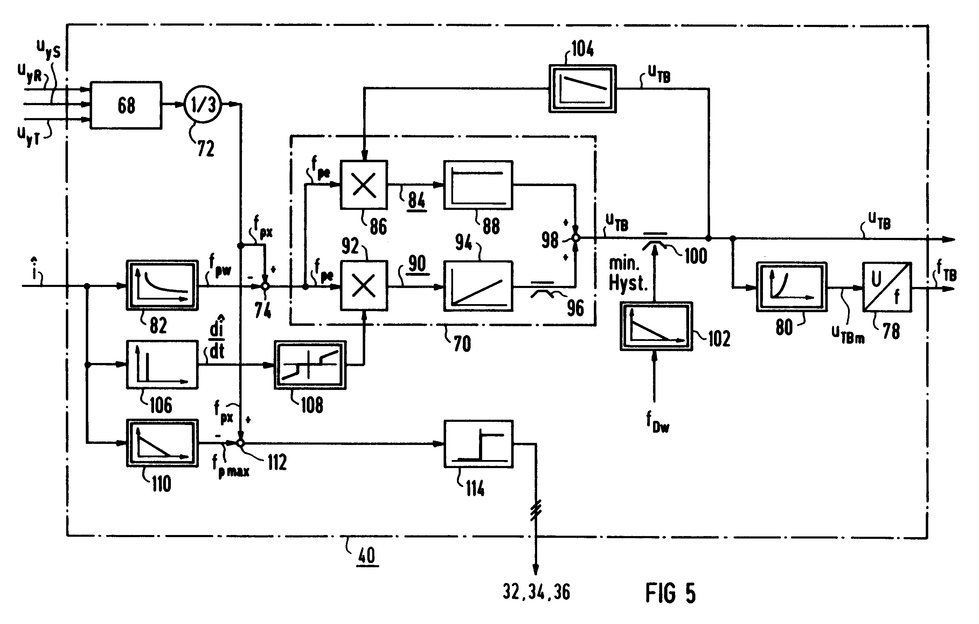

In Figur 5 ist eine vorteilhafte Ausführungsform des Toleranzbandstellers 40 näher dargestellt. Bei dieser Ausführungsform des Toleranzbandstellers 40 wird die Toleranzstellfrequenz $f_{TB}$ aus der Toleranzstellspannung $u_{TB}$ mittels eines ersten Kennliniengebers 80 mit nachgeschaltetem Spannungs-Frequenz-Wandlers 78 erzeugt. Die Kennlinie, die vom ersten Kennliniengeber 80 erzeugt wird, ist nicht linear. Der Pulsfrequenz-Sollwert $f_{pw}$ wird mittels eines zweiten Kennliniengebers 82 in Abhängigkeit der Amplitude $\hat{\imath}$ des Strangstromes $i_{xR}$, $i_{xS}$ und $i_{xT}$ derart verändert, daß bei kleinen Amplituden $\hat{\imath}$ der Pulsfrequenz-Sollwert $f_{pw}$ sehr groß ist, aber bei großen Amplituden $\hat{\imath}$ sehr klein ist.

Der Pulsfrequenzregler 70, der ein PI-Regler ist, ist hier zweikanalig aufgebaut. Der erste Kanal 84 enthält einen Multiplizierer 86 mit einem nachgeschalteten P-Regler 88 und der zweite Kanal 90 enthält ebenfalls einen Multiplizierer 92 mit einem nachgeschalteten I-Regler 94. Dem I-Regler 94 ist ein Begrenzer 96 nachgeschaltet. Ausgangsseitig werden die Kanäle 84 und 90 mit einem Addierer 98 verknüpft. Der Ausgang des Addierers 98 und damit des Pulsfrequenzreglers 70 ist mit einem veränderbaren Begrenzer 100 versehen, wobei der Begrenzer 100 in Abhängigkeit des Frequenz-Sollwertes $f_{Dw}$ der Drehfeldmaschine mittels eines fünften Kennliniengebers 102 veränderbar ist. Die vom Kennliniengeber 102 erzeugte Kennlinie ist linear. Der Ausgang des Pulsfrequenzreglers 70 ist über einen weiteren Kennliniengeber 104 auf einen Eingang des Multiplizierers 86 zurückgeführt, an dessen anderen Eingang die Pulsfrequenzregelabweichung $f_{pe}$ ansteht. Dadurch wir die Verstärkung des ersten Kanals 84 des Pulsfrequenzreglers 70 veränderbar. Auch die Nachstellzeit des zweiten Kanals 90 ist veränderbar. Vorteilhaft ist z.B., die Nachstellzeit während einer Änderung der Amplitude $\hat{\imath}$ des Ausgangsstromes vorübergehend zu verändern. Da kleine Änderungen in der Stromamplitude $\hat{\imath}$ bezüglich der damit verbundenen Schalt-Verlustleistung der Stromrichterventile unkritisch sind, wird das Ausgangssignal di/dt des Differenzierers 106 bei derartigen kleinen Änderungen der Stromamplitude $\hat{\imath}$ über eine Kennlinie erzeugt von einem vierten Kennliniengeber 108 ausgeblendet. Nur große (schnelle) Änderungen der Stromamplitude $\hat{\imath}$, wie sie beispielsweise bei starken Laststößen auftreten, werden zur Änderung der Nachstellzeit des zweiten Kanals 90 des Pulsfrequenzreglers 70 mittels des vierten Kennliniengebers 108 ausgewertet. Vorteil dieser Maßnahme ist, daß ein Normalbetrieb eine schnelle Änderung der Stellgrößen des Pulsfrequenzreglers 70, welche zu ungleichmäßigen Motorgeräuschen führen würde, nicht erfolgen. Der Unempfindlichkeitsbereich der Kennlinie des Kennliniengebers 108 kann mit positiven Auswirkungen auf das Motorgeräusch vergrößert werden, wenn zusätzlich die Kennlinie des Kennliniengebers 104 abgeändert wird.

Die schnelle Änderung der Stromamplitude $\hat{\imath}$ wird mittels des Differenzierers 106 erfaßt, in dem die Amplitude $\hat{\imath}$ am Eingang dieses Differenzierers 106 ansteht. Wenn der Pulsfrequenzregler 70 ein PI-Regler ist, kann der Ausgang des Differenzierers 106 auch mit dem Ausgang des Pulsfrequenzreglers 70 verknüpft werden, um schnelle Änderungen der Amplitude $\hat{\imath}$ des Ausgangsstromes berücksichtigen zu können. Somit wird verhindert, daß bei starken Lastsprüngen die Stromrichterventile infolge der hohen Pulsfrequenz entstehenden hohen Schaltverluste geschädigt bzw. zerstört werden.

Die Amplitude $\hat{\imath}$ des Ausgangsstromes $i_{xR}$, $i_{xS}$ und $i_{xT}$ wird außerdem über einen dritten Kennliniengeber 110 einem negativen Eingang eines weiteren Vergleichers 112 zugeführt. Am positiven Eingang dieses Vergleichers 112 steht der Pulsfrequenz-Istwert $f_{px}$ an. Ausgangsseitig ist der Vergleicher 112 mit einem Komparator 114 verbunden, dessen Ausgang jeweils mit der Ansteuereinrichtung 32, 34 und 36 verknüpft ist. Dadurch wird die maximale Pulsfrequenz $f_{pmax}$ überwacht. Ein Überschreiten des über die Kennlinie des Kennliniengebers 110 ermittelte maximal zulässige Pulsfrequenz (ca. 2 bis 3facher Wert von $f_{pw}$) führt über den Komparator 114 zum Schutz der Stromrichterventile $V_{Ro}$, $V_{Ru}$, $V_{So}$, $V_{Su}$, $V_{To}$ und $V_{Tu}$ zur sofortigen Impulssperre.

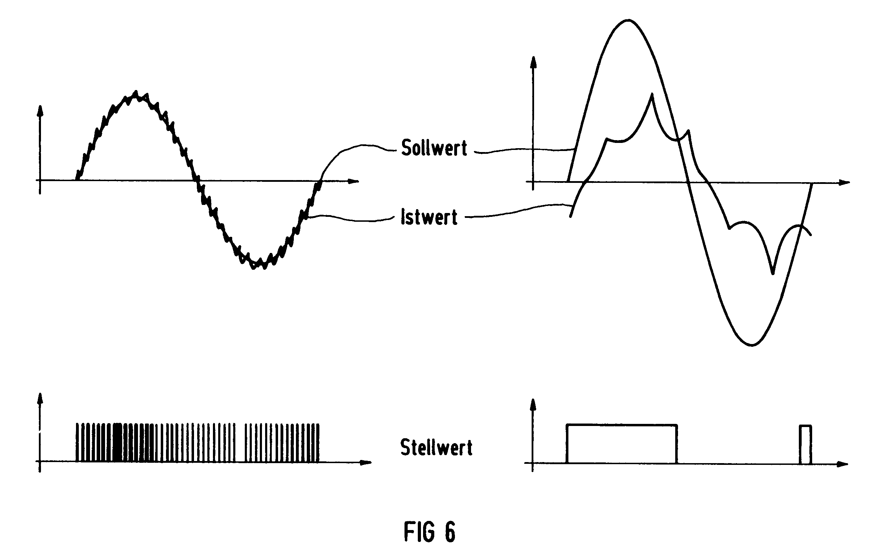

Wenn der gleichgerichtete Wert der Grundschwingung der Klemmspannung des Verbrauchers (d.h. die vektorielle Summe der induzierten Spannung eines Motors und der Spannungsabfälle an seinen Reaktanzen) näherungsweise der Zwischenkreisspannung des Wechselrichters entspricht, ist eine exakte Stromregelung mangels ausreichender Stellreserve des Stellgliedes nicht mehr möglich. Dies ist bei Motoren üblicherweise im Drehzahlbereich ab etwa der Nenndrehzahl der Fall. In diesem Betriebsfall läßt sich die beschriebene Einrichtung als System zur Steuerung der Ausgangsspannung des Pulswechselrichters 2 betreiben. Hierzu wird die Amplitude der von einem überlagerten Regelsystem vorgegebenen Sollwerte $i_{wR}$, $i_{wS}$ und $i_{wT}$ über den gewünschten Wert der Grundschwingungsamplitude des Umrichter-Ausgangsstromes hinaus erhöht. Die ursprünglichen Stromsollwerte werden damit in Abhängigkeit vom Verhältnis der Zwischenkreisspannung $U_d$ zum Wert der gleichgerichteten Grundschwingung der Klemmspannung in einem stetigen Übergang zu Spannungssollwerten. Der Motorstrom stellt sich dann innerhalb der zugelassenen Grenzen in der benötigten Höhe ein. Im Fall sehr hoher Gegenspannung der Last kann dies bedeuten, daß die Stellsignale $u_{yRK}$, $u_{ySK}$ und $u_{yTK}$ bei positiven Sollwerten $i_{wR}$, $i_{wS}$ bzw. $i_{wT}$ meistens den Pegel "1" und bei negativen Sollwerten $i_{wR}$, $i_{wS}$ bzw. $i_{wT}$ meistens den Pegel "0" annehmen. Prinzipielle Verläufe der interessierenden Größen sind in Figur 6 für den Fall ausreichender Stellreserve (Stromregler arbeitet korrekt) und für den Fall der für eine korrekt arbeitende Stromregelung nicht ausreichende Stellreserve (Übersteuerung) dargestellt. Die von den Stellsignalen $u_{yRK}$, $u_{ySK}$ und $u_{yTK}$ und den Strom-Istwerten $i_{wR}$, $i_{wS}$ und $i_{wT}$ gesteuerten Schutzfunktionen des Pulswechselrichters in den Ansteuereinrichtungen 32, 34 und 36 bleiben weiterhin aktiv, so daß insbesondere keine Gefahr einer Zerstörung des Pulswechselrichters durch einen sich zu hoch einstellenden Laststrom besteht. Diese Schutzfunktionen ermöglichen auch, die "Spitze" im Stromverlauf der Figur 6, rechts, "abzuschneiden", ohne daß der Grundschwingungseffektivwert des Ausgangsstromes nennenswert verringert wird.

Durch das erfindungsgemäße Steuerverfahren basierend auf Zweipunktreglern erhält man schnelle Stromanregelzeiten und, da es nicht mit festen Pulsfrequenzen arbeitet, werden keine Pfeifgeräusche der Motoren hervorgerufen.

**Patentansprüche**

1. Verfahren zur Steuerung eines dreiphasigen Pulswechselrichters (2), bei dem ein dreiphasiges, sinusförmiges Strom-Führungsgrößensystem ($i_{wR}$, $i_{wS}$, $i_{wT}$) vorgegeben wird, die Strangströme ($i_{xR}$, $i_{xS}$, $i_{xT}$) einer dem Pulswechselrichter (2) nachgeschalteten Drehfeldmaschine gemessen, mit den Führungsgrößen ($i_{wR}$, $i_{wS}$, $i_{wT}$) verglichen und in Abhängigkeit der Regelabweichungen ($i_{eR}$, $i_{eS}$, $i_{eT}$) die Phasen (R, S, T) des Pulswechselrichters (2) derart geschaltet werden, daß bei Überschreiten einer einstellbaren, oberen Toleranzgrenze ($i_{oG}$) die entsprechende Phase (R, S, T) mit einem negativen Potential einer Zwischenkreisspannung ($U_d$) und bei Unterschreiten einer einstellbaren, unteren Toleranzgrenze ($i_{uG}$) die entsprechende Phase (R, S, T) mit einem positiven Potential der Zwischenkreisspannung ($U_d$) verbunden werden und wenn keine Regelabweichung ($i_{eR}$, $i_{eS}$, $i_{eT}$) eine vorgegebene Toleranzgrenze überschreitet, werden alle Phasen (R, S, T) mittels eines Freilaufsignals ($F_j$) mit dem positiven oder negativen Potential der Zwischenkreisspannung ($U_d$) derart verbunden, daß der Schaltzustand einer von Reglern (26, 28, 30) erzeugte Stellgröße ($u_{yRK}$ bzw. $u_{ySK}$ bzw. $u_{yTK}$) in den Schaltzustand der beiden anderen Stellgrößen ($u_{ySK}$, $u_{yTK}$ bzw. $u_{yTK}$, $u_{yRK}$ bzw. $u_{yRK}$, $u_{ySK}$) wechselt.

2. Verfahren nach Anspruch 1, **dadurch gekennzeichnet,** daß die obere und untere einstellbare Toleranzgrenze ($i_{oG}$, $i_{uG}$) mittels einer regelbaren Toleranzstellspannung ($u_{TB}$) veränderbar ist, die in Abhängigkeit einer Pulsfrequenz Regelabweichung ($f_{pe}$) ermittelt wird, die aus einem Vergleich eines ermittelten Pulsfrequenz-Istwertes ($f_{px}$) mit einem vorgegebenen Pulsfrequenz-Sollwert ($f_{pw}$) erzeugt ist, wobei der Pulsfrequenz-Istwert ($f_{px}$) gleich ein Drittel der Summe der gemessenen Pulsfrequenzen der Stromrichterventile ($V_{Ro}$, $V_{Ru}$, $V_{So}$, $V_{Su}$, $V_{To}$, $V_{Tu}$) des Pulswechselrichters (2) ist.

3. Verfahren nach Anspruch 1 und 2, **dadurch gekennzeichnet,** daß die Toleranzstellspannung ($u_{TB}$) invertiert wird und diese invertierte Toleranzstellspannung ($\bar{u}_{TB}$) umgesetzt wird in eine äquivalente Toleranzstellfrequenz ($f_{TB}$), die die Weiterleitung des erzeugten Freilaufsignals ($F_j$) taktet.

4. Verfahren nach Anspruch 2, **dadurch gekennzeichnet,** daß die Toleranzstellspannung ($u_{TB}$) mittels einer nichtlinearen Kennlinie in eine modifizierte Toleranzstellspannung ($u_{TBm}$) gewandelt wird, die dann in eine äquivalente Toleranzstellfrequenz ($f_{TB}$) umgesetzt wird.

5. Verfahren nach Anspruch 2, **dadurch gekennzeichnet,** daß der Pulsfrequenz-Sollwert ($f_{pw}$) mittels einer nichtlinearen Kennlinie in Abhängigkeit der Amplitude $\hat{i}$ des Strangstromes ($i_{xR}$, $i_{xS}$, $i_{xT}$) verändert wird, wobei bei kleinen Stromamplituden ($\hat{i}$) ein höherer Pulsfrequenz-Sollwert ($f_{pw}$) erzeugt wird als bei großen Stromamplituden ($\hat{i}$).

6. Verfahren nach Anspruch 2, **dadurch gekennzeichnet,** daß die erzeugte Toleranzstellspannung ($u_{TB}$) mit einem Differential der Amplitude ($d\hat{i}/dt$) des Strangstromes ($i_{xR}$, $i_{xS}$, $i_{xT}$) beaufschlagt wird.

7. Verfahren nach Anspruch 2, **dadurch gekennzeichnet,** daß die erzeugte Toleranzstellspannung ($u_{TB}$) zu kleinen Werten hin begrenzt wird, wobei diese Grenze mittels einer Kennlinie in Abhängigkeit des Frequenz-Sollwertes ($f_{Dw}$) der Drehfeldmaschine veränderbar ist.

8. Verfahren nach Anspruch 2, **dadurch gekennzeichnet,** daß mittels einer nichtliniearen Kennlinie in Abhängigkeit der Amplitude ($\hat{i}$) des Strangstromes ($i_{xR}$, $i_{xS}$, $i_{xT}$) eine maximale Pulsfrequenz ($f_{pmax}$) ermittelt wird, die mit dem Pulsfrequenz-Istwert ($f_{px}$) derart verglichen wird, daß bei Überschreitung der maximalen Pulsfrequenz ($f_{pmax}$) die Ansteuereinrichtungen (32, 34, 36) des Pulswechselrichters (2) gesperrt werden.

9. Vorrichtung zur Durchführung des Verfahrens nach Anspruch 1, bestehend aus einem dreiphasigen, sinusförmigen Strom-Führungsgrößengeber (4), einer Stromregleranordnung (6), einer Freilauflogik (38), einem Pulswechselrichter (2) und Meßeinrichtungen (8, 10, 12) zur Erfassung der Strangströme ($i_{xR}$, $i_{xS}$, $i_{xT}$), wobei der Stromführungsgroßengeber (4) jeweils pro Phase (R, S, T) eine Strom-Führungsgröße ($i_{wR}$, $i_{wS}$, $i_{wT}$) einem Vergleicher (20, 22, 24) der Stromregleranordnung (6) zuführt, an dessen negativen Eingang ein Strangstrom ($i_{xR}$, $i_{xS}$, $i_{xT}$) ansteht und der ausgangsseitig einerseits mit einem hysteresebehafteten Zweipunktregler (26, 28, 30) und andererseits mit einer Bereichsbandüberwachungsschaltung (48, 50, 52) der Freilauflogik (38) verknüpft ist, wobei jeder Ausgang dieser Zweipunktregler (26, 28, 30) jeweils einerseits mit einem ersten Eingang eines Umschalters (42, 44, 46) und andererseits mit einem ersten und zweiten Eingang einer Auswertelogik (56) und die Ausgänge der Bereichsbandüberwachungsschaltungen (48, 50, 52) mit einem UND-Gatter (54) verknüpft sind, wobei der Ausgang der Auswertelogik (56) jeweils mit einem zweiten Eingang der Umschalter (42, 44, 46) und der Ausgang des UND-Gattes (54) jeweils mit einem Betätigungseingang dieser Umschalter (42, 44, 46) verbunden sind, denen jeweils eine Ansteuereinrichtung (32, 34, 36) nachgeschaltet sind, an deren Ausgänge jeweils ein Ansteuerbefehl ($SB_{R+}$, $SB_{R-}$, $SB_{S+}$, $SB_{S-}$, $SB_{T+}$, $SB_{T-}$) für ein oberes und unteres Stromrichterventil ($V_{Ro}$, $V_{Ru}$, $V_{So}$, $V_{Su}$, $V_{To}$, $V_{Tu}$) einer Phase (R, S, T) des Pulswechselrichters (2) anstehen.

10. Vorrichtung nach Anspruch 9, **dadurch gekennzeichnet,** daß ein Toleranzbandsteller (40) vorgesehen ist, der eingangsseitig mit den Ausgängen der Umschalter (42, 44, 46) und der ausgangsseitig einerseits mit einem Betätigungseingang eines dem Ausgang des ODER-Gatters (64) der Auswertelogik (56) nachgeschaltetem Unterbrecher (66) und andererseits mit den Stelleingängen der hysteresebehafteten Zweipunktreglern (26, 28, 30) und der Bereichsbandüberwachungsschaltungen (48, 50, 52) verbunden ist und an dessen weiteren Eingängen ein Pulsfrequenz-Sollwert ($f_{pw}$) und eine Amplitude ($\hat{i}$) des Strangstromes ($i_{xR}$, $i_{xS}$, $i_{xT}$) ansteht.

11. Vorrichtung nach Anspruch 9, **dadurch gekennzeichnet,** daß die Auswertelogik (56) aus drei UND-Gattern (58, 60, 62) besteht, deren Ausgänge mit einem ODER-Gatter (64) verknüpft sind, wobei der Ausgang des Zweipunktreglers (26) der Phase R mit dem ersten Eingang des ersten UND-Gattes (58) und dem zweiten Eingang des dritten UND-Gatters (62), der Ausgang des Zweipunktreglers (28) der Phase S mit dem zweiten Eingang des ersten UND-Gatters (58) und dem ersten Eingang des zweiten UND-Gatters (60) und der Ausgang des Zweipunktreglers (30) der Phase T mit dem zweiten Eingang des zweiten UND-Gatters (60) und dem ersten Eingang des dritten UND-Gatters (62) verknüpft sind.

12. Vorrichtung nach Anspruch 9, **dadurch gekennzeichnet,** daß als Bereichsbandüberwachungsschaltung (48 bzw. 50 bzw. 52) ein Fensterkomparator vorgesehen ist.

13. Vorrichtung nach Anspruch 10, **dadurch gekennzeichnet,** daß der Toleranzbandsteller (40) eingangsseitig einen Frequenzzähler (68) aufweist, dem eine Konstante (72) nachgeschaltet ist, deren Ausgang mit einem positiven Eingang eines Vergleichers (74) verknüpft ist, an dessen negativem Eingang ein Pulsfrequenz-Sollwert ($f_{pw}$) ansteht, wobei der Ausgang des Vergleichers (74) mit einem Pulsfrequenzregler (70) verbunden ist, dessen Ausgang mit einem ersten Ausgang des Toleranzbandstellers (40) verknüpft ist.

14. Vorrichtung nach Anspruch 13, **dadurch gekennzeichnet,** daß der Ausgang des Pulsfrequenzreglers (70) über einen Invertierer (76) mit einem Spannungs-Frequenz-Wandler (78) verbunden ist, dessen Ausgang mit einem zweiten Ausgang des Toleranzbandstellers (40) verknüpft ist.

15. Vorrichtung nach Anspruch 13, **dadurch gekennzeichnet,** daß der Ausgang des Pulsfrequenzreglers (70) über einen ersten Kennliniengeber (80) mit einem Spannungs-Frequenz-Wandler (78) verbunden ist, dessen Ausgang mit einem zweiten Ausgang des Toleranzbandstellers (40) verknüpft ist.

16. Vorrichtung nach Anspruch 13, **dadurch gekennzeichnet,** daß der negative Eingang des Vergleichers (74) des Toleranzbandstellers (40) mit dem Ausgang eines zweiten Kennliniengebers (82) verknüpft ist, an dessen Eingang die Amplitude $\hat{(i)}$ des Strangstromes ($i_{xR}$, $i_{xS}$, $i_{xT}$) ansteht.

17. Vorrichtung nach Anspruch 10, **dadurch gekennzeichnet,** daß dem Eingang des Toleranzbandstellers (40), an dem die Amplitude des Strangstromes ($i_{xR}$, $i_{xS}$, $i_{xT}$) ansteht, ein Differenzierer (106) und ein dritter Kennliniengeber (110) nachgeschaltet ist, wobei der Ausgang des Differenzierers (106) über einen vierten Kennliniengeber (108) mit einem Eingang "Nachstellzeit" des Pulsfrequenzreglers (70) und wobei der Ausgang des dritten Kennliniengebers (110) mit einem negativen Eingang eines weiteren Vergleichers (112) verbunden ist, an dessen positivem Eingang der Pulsfrequenz-Istwert ($f_{px}$) ansteht und dessen Ausgang über einen Komparator (114) mit den Ansteuereinrichtungen (32, 34, 36) der Stromregleranordnung (6) verknüpft ist.

18. Vorrichtung nach Anspruch 17, **dadurch gekennzeichnet,** daß der Ausgang des Pulsfrequenzreglers (70) über einen weiteren Kennliniengeber (104) auf seinen Eingang "Verstärkung" rückgekoppelt ist.

19. Vorrichtung nach Anspruch 13, **dadurch gekennzeichnet,** daß als Pulsfrequenzregler (70) ein PI-Regler vorgesehen ist.

20. Vorrichtung nach den Ansprüchen 17 bis 19, **dadurch gekennzeichnet,** daß der Pulsfrequenzregler (70) zweikanalig aufgebaut ist, wobei der erste Kanal (84) einen P-Regler (88) mit vorgeschaltetem Multiplizierer (86) und der zweite Kanal (90) einen I-Regler (94) mit vorgeschaltetem Multiplizierer (92) enthält, wobei dem I-Regler (94) ein Begrenzer (96) nachgeschaltet ist und wobei die Ausgänge der beiden Kanäle (84, 90) mittels eines Addierers (98) verbunden sind.

21. Vorrichtung nach Anspruch 10, **dadurch gekennzeichnet,** daß als Unterbrecher (66) eine taktzustandsgesteuerte Speicherzelle vorgesehen ist, dessen Dateneingang (D) mit dem Ausgang des UND-Gatters (54) der Freilauflogik (38), dessen Takteingang (Cl) mit einem Ausgang des Toleranzbandstellers (40) und dessen Ausgang (Q) jeweils mit einem Betätigungseingang der Umschalter (42, 44, 46) verbunden sind.

**Claims**

1. Method for controlling a three-phase pulse-controlled inverter (2), where a three-phase, sinusoidal current reference variable system ($i_{wR}$, $i_{wS}$, $i_{wT}$) is specified, the phase currents ($i_{xR}$, $i_{xS}$, $i_{xT}$) of a polyphase machine downstream of the pulse-controlled inverter (2) are measured, compared with the reference variables ($i_{wR}$, $i_{wS}$, $i_{wT}$) and in dependence upon the deviations ($i_{eR}$, $i_{eS}$, $i_{eT}$) the phases (R, S, T) of the pulse-controlled inverter (2) are connected in such a way that upon the exceeding of an adjustable, upper tolerance limit ($i_{oG}$) the appropriate phase (R, S, T) is connected to a negative potential of an intermediate circuit voltage ($U_d$) and upon the falling-short of an adjustable, lower tolerance limit ($i_{uG}$) the appropriate phase (R, S, T) is connected to a positive potential of the intermediate circuit voltage ($U_d$) and if no deviation ($i_{eR}$, $i_{eS}$, $i_{eT}$) exceeds a specified tolerance limit, all phases (R, S, T) are connected by means of a free-running signal ($F_j$) to the positive or negative potential of the intermediate circuit voltage ($U_d$) in such a way that the circuit state of a correcting variable ($u_{yRK}$ and $u_{ySK}$ and $u_{yTK}$) generated by controllers (26, 28, 30) changes into the circuit state of the two other correcting variables ($u_{ySK}$, $u_{yTK}$ and $u_{yTK}$, $u_{yRK}$ and $u_{yRK}$, $u_{ySK}$).

2. Method according to claim 1, characterized in that the upper and lower adjustable tolerance limit ($i_{oG}$, $i_{uG}$) can be altered by means of a controllable tolerance adjusting voltage ($u_{TB}$) which is determined in dependence upon a pulse frequency deviation ($f_{pe}$) which is generated from a comparison of a determined actual pulse frequency value ($f_{px}$) with a specified desired pulse frequency value ($f_{pw}$), with the actual pulse frequency value ($f_{px}$) being equal to a third of the sum of the measured pulse frequencies of the converter valves ($V_{Ro}$, $V_{Ru}$, $V_{So}$, $V_{Su}$, $V_{To}$, $V_{Tu}$) of the pulse-controlled inverter (2).

3. Method according to claim 1 and 2, characterized in that the tolerance adjusting voltage ($u_{TB}$) is inverted and this inverted tolerance adjusting voltage ($\overline{u_{TB}}$) is converted into an equivalent tolerance adjusting frequency ($f_{TB}$) which clocks the relaying of the generated free-running signal ($F_j$).

4. Method according to claim 2, characterized in that the tolerance adjusting voltage ($u_{TB}$) is changed by means of a non-linear characteristic into a modified tolerance adjusting voltage ($u_{TBm}$) which is then converted into an equivalent tolerance adjusting frequency ($f_{TB}$).

5. Method according to claim 2, characterized in that the desired pulse frequency value ($f_{pw}$) is altered by means of a non-linear characteristic in dependence upon the amplitude ($\hat{i}$) of the phase current ($i_{xR}$, $i_{xS}$, $i_{xT}$), in which, with small current amplitudes ($\hat{i}$), a higher desired pulse frequency value ($f_{pw}$) is generated than with large current amplitudes ($\hat{i}$).

6. Method according to claim 2, characterized in that the tolerance adjusting voltage ($u_{TB}$) generated is loaded with a differential of the am-plitude ($d\hat{i}/dt$) of the phase current ($i_{xR}$, $i_{xS}$, $i_{xT}$).

7. Method according to claim 2, characterized in that the tolerance adjusting voltage ($u_{TB}$) generated is limited towards small values, with this limit being capable of being altered by means of a characteristic in dependence upon the desired frequency value ($f_{Dw}$) of the polyphase machine.

8. Method according to claim 2, characterized in that by means of a non-linear characteristic in dependence upon the amplitude ($\hat{i}$) of the phase current ($i_{xR}$, $i_{xS}$, $i_{xT}$) a maximum pulse frequency ($f_{pmax}$) is determined, which is compared with the actual pulse frequency value ($f_{px}$) in such a way that upon the exceeding of the maximum pulse frequency ($f_{pmax}$) the con-trol devices (32, 34, 36) of the pulse-controlled inverter (2) are blocked.

9. Device for carrying out the method according to claim 1, comprising a three-phase, sine-wave current reference variable transmitter (4), a current controller arrangement (6), a free-running logic unit (38), a pulse-controlled inverter (2) and measuring devices (8,10,12) for detecting the phase currents ($i_{xR}$,$i_{xS}$,$i_{xT}$), the current reference variable transmitter (4) supplying one current reference variable ($i_{wR}$,$i_{wS}$,$i_{wT}$) per phase (R,S,T) to a respective comparator (20,22,24) of the current controller arrangement (6), whereby at the respective negative inputs of said comparators (20,22,24) there is a phase current ($i_{xR}$,$i_{xS}$,$i_{xT}$) and each of said comparators (20,22,24) connected on the output side on the one hand to one respective two-position controller (26,28,30) subject to hysteresis and on the other hand to one respective band monitoring circuit (48,50,52) of the free-running logic unit (38), each output of said two-position controllers (26,28,30) being connected on the one hand to one respective first input of a changeover switch (42,44,46) and on the other hand to one respective first and second input of an evaluation logic unit (56), the outputs of said band monitoring circuits (48,50,52) being connected to an AND-gate (54), the output of said evaluation logic unit (56) being connected to respective second inputs of said changeover switches (42,44,46), the output of said AND-gate (54) being connected to respective actuation inputs of said changeover switches (42,44,46), each of said changeover switches (42,44,46) being followed by one respective control device (32,34,36), whereby at the outputs of said control devices (32,34,36) there are control commands ($SB_{R+}$,$SB_{R-}$,$SB_{S+}$,$SB_{S-}$,$SB_{T+}$,$SB_{T-}$) for respective upper and lower converter valves ($V_{Ro}$,$V_{Ru}$,$V_{So}$,$V_{Su}$,$V_{To}$,$V_{Tu}$) of one respective phase (R,S,T) of said pulse-controlled inverter (2).

10. Device according to claim 9, characterized in that a tolerance band adjuster (40) is provided, which is connected on the input side to the outputs of the changeover switches (42, 44, 46) and on the output side is connected on the one hand to an actuation input of an interrupter (66) downstream of the output of the OR-gate (64) of the evaluation logic unit (56) and on the other hand to the adjusting inputs of the two-position controllers (26, 28, 30) subject to hysteresis and the band monitoring circuits (48, 50, 52) and at the further inputs of which there is a desired pulse frequency value ($f_{pw}$) and an amplitude ($\hat{i}$) of the phase current ($i_{xR}$, $i_{xS}$, $i_{xT}$).

11. Device according to claim 9, characterized in that the evaluation logic unit (56) consists of three AND-gates (58, 60, 62), the outputs of which are linked to an OR-gate (64), with the output of the two-position controller (26) of the phase R being linked to the first input of the first AND-gate (58) and the second input of the third AND-gate (62), the output of the two-position controller (28) of the phase S being linked to the second input of the first AND-gate (58) and the first input of the second AND-gate (60) and the output of the two-position controller (30) of the phase T being linked to the second input of the second AND-gate (60) and the first input of the third AND-gate (62).

12. Device according to claim 9, characterized in that a window comparator is provided as band monitoring circuit (48 and 50 and 52).

13. Device according to claim 10, characterized in that the tolerance band adjuster (40) has on the input side a frequency counter (68), downstream of which there is a constant (72), the output of which is linked to a positive input of a comparator (74), at the negative input of which there is a desired pulse frequency value ($f_{pw}$), with the output of the comparator (74) being connected to a pulse frequency controller (70), the output of which is linked to a first output of the tolerance band adjuster (40).

14. Device according to claim 13, characterized in that the output of the pulse frequency controller (70) is connected by way of an inverter (76) to a voltage frequency transformer (78), the output of which is linked to a second output of the tolerance band adjuster (40).

15. Device according to claim 13, characterized in that the output of the pulse frequency controller (70) is connected by way of a first characteristic transmitter (80) to a voltage frequency transformer (78), the output of which is linked to a second output of the tolerance band adjuster (40).

16. Device according to claim 13, characterized in that the negative input of the comparator (74) of the tolerance band adjuster (40) is linked to the output of a second characteristic transmitter (82), at the input of which there is the amplitude ($\hat{i}$) of the phase current ($i_{xR}$, $i_{xS}$, $i_{xT}$).

17. Device according to claim 10, characterized in that downstream of the input of the tolerance band adjuster (40), at which there is the amplitude of the phase current ($i_{xR}$, $i_{xS}$, $i_{xT}$), are a differentiator (106) and a third characteristic transmitter (110), with the output of the differentiator (106) being connected by way of a fourth characteristic transmitter (108) to an input "reset time" of the pulse frequency controller (70) and with the output of the third characteristic transmitter (110) being connected to a negative input of a further comparator (112), at the positive input of which there is the actual pulse frequency value ($f_{px}$) and the output of which is linked by way of a comparator (114) to the control devices (32, 34, 36) of the current controller arrangement (6).

18. Device according to claim 17, characterized in that the output of the pulse frequency controller (70) is fed back by way of a further characteristic transmitter (104) to its input "amplification".

19. Device according to claim 13, characterized in that a PI controller is provided as pulse frequency controller (70).

20. Device according to claims 17 to 19, characterized in that the pulse frequency controller (70) is assembled with two channels, with the first channel (84) containing a P-controller (88) with upstream multiplier (86) and the second channel (90) containing an I-controller (94) with upstream multiplier (92), with a limiter (96) being downstream of the I-controller (94) and with the outputs of the two channels (84, 90) being connected by means of an adder (98).

21. Device according to claim 10, characterized in that a clock-state-controlled memory cell is provided as interrupter (66), the data input (D) of which is connected to the output of the AND-gate (54) of the free-running logic unit (38), the clock input (C1) of which is connected to an output of the tolerance band adjuster (40) and the output (Q) of which is in each case connected to an actuation input of the changeover switches (42, 44, 46).

**Revendications**

1. Procédé de commande d'un onduleur (2) triphasé à impulsions, suivant lequel on prédétermine un système triphasé sinusoïdal de grandeurs pilotes de courant ($i_{wA}$, $i_{wS}$, $i_{wT}$), on mesure les courants de phase ($i_{xR}$, $i_{xS}$, $i_{xT}$) d'une machine à champ tournant branchée en aval de l'onduleur à impulsions (2), on les compare aux grandeurs pilotes ($i_{wR}$, $i_{wS}$, $i_{wT}$) et on branche les phases (R, S, T) de l'onduleur à impulsions (2) en fonction des écarts de régulation ($i_{eR}$, $i_{eS}$, $i_{eT}$) de sorte que, lorsque l'on passe au-dessus d'une limite supérieure ($i_{oG}$) de tolérance réglable, la phase correspondante (R, S, T) est à une tension ($U_d$) de circuit intermédiaire négative et, dans le cas où l'on passe endessous d'une limite inférieure ($i_{uG}$) de tolérance réglable, la phase correspondante (R, S, T) est à une tension ($U_d$) de circuit intermédiaire positive, et si aucun des écarts de régulation ($i_{eR}$, $i_{eS}$, $i_{eT}$) ne passe au dessus d'une limite de tolérance prescrite, toutes les phases (R, S, T) sont, au moyen d'un signal de fonctionnement unidirectionnel ($F_j$), au potentiel positif ou négatif de la tension ($U_d$) de circuit intermédiaire de sorte que l'état de commutation d'une grandeur de régulation ($u_{yRK}$ ou $u_{ySK}$, ou $u_{yTK}$), produite par des régulateurs (26, 28, 30) passe à l'état de commutation des deux autres grandeurs de régulation ($u_{ySK}$, $u_{yTK}$ ou $u_{yTK}$, $u_{yRK}$ ou $u_{yRK}$, $u_{ySK}$).

2. Procédé suivant la revendication 1, caractérisé en ce que les limites supérieure et inférieure réglables de tolérance ($i_{oG}$, $i_{uG}$) peuvent être modifiées au moyen d'une tension réglable ($u_{TB}$) de régulation de tolérance ($u_{TB}$), qui est déterminée en fonction d'un écart ($f_{pe}$) de régulation de la fréquence des impulsions, qui est obtenu à partir d'une comparaison d'une valeur réelle détectée ($f_{px}$) de fréquence des impulsions à une valeur de consigne prédéterminée ($f_{pw}$) de la fréquence des impulsions, la valeur réelle ($f_{px}$) de la fréquence des impulsions étant égale au tiers de la somme des fréquences mesurées des impulsions des valves ($V_{Ro}$, $V_{Ru}$, $V_{So}$, $V_{Su}$, $V_{To}$, $V_{Tu}$) du convertisseur statique de l'onduleur à impulsions (2).

3. Procédé suivant les revendications 1 et 2, caractérisé en ce que la tension ($u_{TB}$) de régulation de tolérance est inversée et que cette tension de régulation de tolérance inversée ($\overline{u}_{TB}$) est convertie en une fréquence de régulation de tolérance équivalente ($f_{TB}$), qui commande de façon cadencée la retransmission du signal ($F_y$) de fonctionnement unidirectionnel produit.

4. Procédé suivant la revendication 2, caractérisé en ce que la tension de régulation de tolérance ($u_{TB}$) est convertie suivant une caractéristique non linéaire, en une tension de régulation de tolérance modifiée ($u_{TBm}$), qui est ensuite convertie en une fréquence de régulation de tolérance équivalente ($f_{TB}$).

5. Procédé suivant la revendication 2, caractérisé en ce que la valeur de consigne ($f_{pw}$) de fréquence des impulsions est modifiée suivant une caractéristique non linéaire en fonction de l'amplitude î du courant de phase ($i_{xR}$, $i_{xS}$, $i_{xT}$), une valeur de consigne ($f_{pw}$) de la fréquence des impulsions qui est plus grande pour de petites amplitudes de courant (î) que pour de grandes amplitudes de courant (î), étant produite.

6. Procédé suivant la revendication 2, caractérisé en ce qu'à la tension ($u_{TB}$) de régulation de tolérance produite est alimentée par une différentielle de l'amplitude ($d\hat{i}/dt$) du courant de phase ($i_{xR}$, $i_{xS}$, $i_{xT}$).

7. Procédé suivant la revendication 2, caractérisé en ce que la tension de régulation de tolérance produite ($u_{TB}$) est limitée vers de faibles valeurs, cette limite pouvant être modifiée suivant une caractéristique en fonction de la fréquence de consigne ($f_{Dw}$) de la machine à champ tournant.

8. Procédé suivant la revendication 2, caractérisé en ce que l'on détermine suivant une caractéristique non linéaire, une fréquence maximale ($f_{pmax}$) des impulsions en fonction de l'amplitude (î) du courant de phase ($i_{xR}$, $i_{xS}$, $i_{xT}$), fréquence qui est comparée à la valeur réelle ($f_{px}$) de la fréquence des impulsions de sorte que, dans le cas d'un dépassement de la fréquence maximale ($f_{pmax}$) des impulsions, les dispositifs de commande (32, 34, 36) de l'onduleur à impulsions (2) sont bloqués.

9. Dispositif pour la mise en oeuvre du procédé suivant la revendication 1, constitué d'un générateur sinusoïdal triphasé (4) de grandeurs pilotes de courant, un dispositif (6) de régulation de courant, une unité logique à fonctionnement unidirectionnel (38), un onduleur à impulsions (2) et des dispositifs de mesure (8, 10, 12) destiné à détecter les courants de phase ($i_{xR}$, $i_{xS}$, $i_{xT}$), dans lequel le générateur (4) de grandeurs pilotes de courant envoie, respectivement pour chaque phase (R, S, T), une grandeur pilote de courant ($i_{wR}$, $i_{wS}$, $i_{wT}$) à un comparateur (20, 22, 24) du dispositif (6) de régulation de courant, à l'entrée négative duquel est appliqué un courant de phase ($i_{xR}$, $i_{xS}$, $i_{xT}$) et qui est raccordé, côté sortie, d'une part à un régulateur à deux positions (26, 28, 30) avec hystérésis, et d'autre part à un circuit (48, 50, 52) de contrôle de plage de l'unité logique (38) à fonctionnement unidirectionnel, chaque sortie de ce régulateur à deux positions (26, 28, 30) étant raccordée d'une part à une première entrée d'un commutateur (42, 44, 46) et d'autre part à des première et seconde entrées d'une logique d'évaluation (56), les sorties des circuits (48, 50, 52) de contrôle de plage étant raccordées à une porte ET (54), la sortie de la logique d'évaluation (56) étant raccordée à une seconde entrée des commutateurs (42, 44, 46), la sortie de la porte ET (54) étant raccordée respectivement à une entrée d'actionnement de ces commutateurs (42, 44, 46), en aval desquels est branchée un dispositif de commande (32, 34, 36) sur les sorties duquel apparaissent respectivement une instruction de commande ($SB_{R+}$, $SB_{R-}$, $SB_{S+}$, $SB_{S-}$, $SB_{T+}$, $SB_{T-}$) pour des valves de conversion statique supérieure et inférieure ($V_{Ro}$, $V_{Ru}$, $V_{So}$, $V_{Su}$, $V_{To}$, $V_{Tu}$) d'une phase (R, S, T) de l'onduleur à impulsions (2).

10. Dispositif suivant la revendication 9, caractérisé en ce qu'il est prévu un régulateur (40) de bande de tolérance, qui est relié côté entrée aux sorties des commutateurs (42, 44, 46) et qui est raccordé, côté sortie, d'une part à une entrée d'actionnement d'un interrupteur (66) branché à la sortie de la porte OU (64) de la logique d'évaluation (56), et d'autre part aux entrées de réglage des régulateurs à deux positions (26, 28, 30) avec hystérésis, et à celles des circuits (48, 50, 52) de contrôle de plage, aux autres entrées desquelles sont appliquées une valeur de consigne ($f_{pw}$) de la fréquence des impulsions et une amplitude (î) du courant de phase ($i_{xR}$, $i_{xS}$, $i_{xT}$).

11. Dispositif suivant la revendication 9, caractérisé en ce que la logique d'évaluation (56) est constituée de trois portes ET (58, 60, 62), dont les sorties sont reliées à une porte OU (64), la sortie du régulateur à deux positions (26) de la phase R étant connectée à la première entrée de la première porte ET (58) et à la seconde entrée de la troisième porte ET (62), la sortie du régulateur à deux positions (28) de la phase S étant connectée à la seconde entrée de la première porte ET (58) et à la première entrée de la seconde porte ET (60), la sortie du régulateur à deux positions (30) de la phase T étant connectée à la seconde entrée de la deuxième porte ET (60) et à la première entrée de la troisième porte ET (62).

12. Dispositif suivant la revendication 9, caractérisé en ce qu'un comparateur à fenêtre est prévu en tant que circuit (48, 50 et 52) de contrôle de plage.

13. Dispositif suivant la revendication 10, caractérisé en ce que le régulateur (40) de bande de tolérance comporte, côté entrée, un compteur de fréquences (68), à la sortie duquel est branchée l'unité (72) délivrant une constante, dont la sortie est connectée à une entrée positive d'un comparateur (74), à l'entrée négative duquel est appliquée une valeur de consigne ($f_{pw}$) de la fréquence d'impulsions, la sortie du comparateur (74) étant reliée à un régulateur (70) de fréquence des impulsions, dont la sortie est reliée à une première sortie du régulateur (40) de bande de tolérance.

14. Dispositif suivant la revendication 13, caractérisé en ce que la sortie du régulateur (70) de fréquence des impulsions est raccordée par l'intermédiaire d'un inverseur (76) à un convertisseur tension-fréquence (78) dont la sortie est reliée à une seconde sortie du régulateur (40) de plage.

15. Dispositif suivant la revendication 13, caractérisé en ce que la sortie du régulateur (70) de fréquence des impulsions est reliée par l'intermédiaire d'un premier générateur de courbes caractéristiques (80) à un convertisseur tension-fréquence (78), dont la sortie est reliée à une seconde entrée du régulateur (40) de bande de tolérance.

16. Dispositif suivant la revendication 13, caractérisé en ce que l'entrée négative du comparateur (64) du régulateur (40) de bande de tolérance est connectée à la sortie d'un second générateur (82) de courbes caractéristiques, à l'entrée duquel est appliquée l'amplitude (î) du courant de phase ($i_{xR}$, $i_{xS}$, $i_{xT}$).

17. Dispositif suivant la revendication 10, caractérisé en ce qu'en aval de l'entrée du régulateur (40) de bande de tolérance, à laquelle est appliquée l'amplitude du courant de phase ($i_{xR}$, $i_{xS}$, $i_{xT}$), sont branchés un circuit différentiateur (106) et un troisième générateur (110) de courbes caractéristiques, la sortie du circuit différentiateur (106) étant connectée par l'intermédiaire d'un quatrième générateur de courbes caractéristiques (108) à une entrée "temps de réajustement" du régulateur (70) de fréquence des impulsions, la sortie du troisième générateur (110) de courbes caractéristiques étant connectée à une entrée négative d'un autre comparateur (112), à l'entrée positive duquel est appliquée la valeur réelle ($f_{px}$) de la fréquence des impulsions et dont la sortie est reliée par l'intermédiaire d'un comparateur (114) aux dispositifs de commande (32, 34, 36) du dispositif (6) de régulation de courant.

18. Dispositif suivant la revendication 17, caractérisé en ce que la sortie du régulateur (70) de fréquence des impulsions est réinjectée par l'intermédiaire d'un autre générateur (104) de courbes caractéristiques, à son entrée "amplification".

19. Dispositif suivant la revendication 13, caractérisé en ce qu'il est prévu comme régulateur (70) de fréquence des impulsions, un régulateur à action proportionnelle et intégrale.

20. Dispositif suivant les revendications 17 à 19, caractérisé en ce que le régulateur (70) de fréquence des impulsions a deux canaux, le premier canal (84) ayant un régulateur à action proportionnelle (88) à l'entrée duquel est branché un multiplicateur (86), le second canal (90) ayant un régulateur à action intégrale (94) à l'entrée duquel est branché un multiplicateur (92), un limiteur (96) étant branché à la sortie du régulateur à action intégrale (94) et les sorties des deux canaux (84, 90) étant reliées par un additionneur (98).

21. Dispositif suivant la revendication 10, caractérisé en ce qu'il est prévu, comme interrupteur (66), une cellule de mémoire commandée par l'état de cadencement, dont l'entrée de données (D) est connectée à la sortie de la porte ET (54) de l'unité logique (38) à fonctionnement unidirectionnel, dont l'entrée de cadence (C1) est connectée à une sortie du régulateur (40) de bande de tolérance et dont la sortie (Q) est raccordée à une entrée d'actionnement des commutateurs (42, 44, 46).

FIG 1

FIG 2

FIG 3

FIG 4

EP 0 456 854 B1

FIG 5

32,34,36

40

$f_{TB}$

$u_{TB}$

78 U/f

$u_{TBm}$

80

100 min. Hyst.

102 $f_{Dw}$

104 $u_{TB}$

$u_{TB}$

98 96

88 94

84 70

86 $f_{pe}$

92 $f_{pe}$

90

108

74 $f_{px}$

$f_{pw}$

$\frac{di}{dt}$

112 $f_{px}$ $f_{pmax}$

82

106

110

114

68

72 1/3

$u_{yS}$
$u_{yR}$
$u_{yT}$

$i$

Sollwert

Istwert

Stellwert

FIG 6